# EUROPEAN PATENT APPLICATION

(11) **EP 4 431 321 A1**
(43) Date of publication of application: **18.09.2024**
(21) Application number: 23315051.5
(22) Date of filing: 16.03.2023
(51) Int. Cl.: B60J 1/16, B64C 1/14

(54) **A WINDOW WITH A VENT WINDOW ASSEMBLY FOR A VEHICLE**

(71) Applicant: AIRBUS HELICOPTERS DEUTSCHLAND GmbH, 86609 Donauwörth (DE); Airbus Helicopters, 13725 Marignane Cedex (FR)
(72) Inventor: Langevin, Gildas, D-86157 AUGSBURG (DE); D'Avino, Francesco, D-86150 AUGSBURG (DE); Fruitet, Pierre, F-30170 POMPIGNAN (FR); Negrel, Florence, F-13400 AUBAGNE (FR)
(74) Representative: GPI Brevets

(57) **Abstract**

The invention relates to a window (6) for a vehicle (1) with a main window pane (6a) having a vent window opening (6b), and a vent window assembly (7) mounted to the main window pane. The vent window assembly comprises: a movable vent window pane (7a) adapted for closing the vent window opening in closed state of the vent window assembly; a first vent window frame assembly (8) comprising a first support frame (8a) arranged on a first surface (6c) of the main window pane; and a second vent window frame assembly (10) comprising a second support frame (10a) arranged on a second surface (6d) of the main window pane, wherein the second vent window frame assembly is rigidly attached to the first vent window frame assembly at the vent window opening such that the first and second vent window frame assemblies fasten each other at the main window pane.

## Description

The invention is related to a window for a vehicle comprising a main window pane with a vent window opening, and a vent window assembly that is mounted to the main window pane. The invention is further related to a vehicle which comprises a window with a vent window assembly.

Vent window assemblies may be provided in windows of a variety of different vehicles, such as cars, trucks, trains, ships, aircrafts and so on. By way of example, the documents EP 3 137 325 A1 and US 2004/0134131 A1 describe windows with vent window assemblies.

In general, vent window assemblies are integrated into windows which may not be opened as such so that, nevertheless, venting is enabled through the vent window assemblies. More specifically, respective vent window assemblies which are e. g. provided in windows of aircraft cockpit windows may be opened during poor weather conditions or stormy weather in order to avoid misting of the aircraft cockpit windows. Furthermore, such vent window assemblies may be opened in case of difficult flight conditions to allow a respective flight crew to retrieve a visual reference point.

Accordingly, vent window assemblies which may also be referred to as "bad weather windows" or "storm windows" are usually mandatory features in aircrafts, at least in aircraft cockpits. They are generally arranged at suitable openings provided in main window panes of windows and associated opening/closing mechanisms are either screwed/bolted or adhesively bonded to the main window panes.

In screwed/bolted assemblies, a plurality of holes is drilled in the main window pane at predetermined positions around a respective vent window opening and the vent window assembly is maintained in the respective vent window opening by means of screws and/or bolts passing through the drilled holes formed in the main window pane. However, due to weight and cost constraints, the main window pane as such is generally made out of acrylic so that sooner or later a crack will appear starting from one of the drill holes due to a combination of stress concentration, aging and repeated flight loads. This phenomenon can be postponed by design or assembly improvements, but can generally not be avoided entirely.

In bonded assemblies, associated vent window frames are held at the respective vent window opening of the main window pane by means of an adhesive. In this case, flight loads are continuously and homogeneously transmitted between the main window pane and the vent window assembly. However, a respectively required bonding process involves specifically trained operators, which does not allow for easy and quick field replacement in case of an issue. Additionally, structural bonding may be complex to develop and require specific provisions to ensure a satisfactory life cycle, which may impact cost, perceived quality, etc.

It is, therefore, an object of the present invention to provide a new window with a vent window assembly that is suitable to overcome the above-described drawbacks and problems of the state-of-the-art.

This object is solved by a window comprising the features of claim 1. More specifically, according to the present invention a window for a vehicle is provided, comprising a main window pane with a vent window opening, and a vent window assembly that is mounted to the main window pane. The vent window assembly comprises a movable vent window pane that is adapted for closing the vent window opening in a closed state of the vent window assembly, a first vent window frame assembly comprising a first support frame that is arranged on a first surface of the main window pane, and a second vent window frame assembly comprising a second support frame that is arranged on a second surface of the main window pane. The second vent window frame assembly is rigidly attached to the first vent window frame assembly at the vent window opening such that the first and second vent window frame assemblies fasten each other at the main window pane.

In other words, in the inventive window the main window pane supports the vent window assembly. The vent window assembly, in turn, comprises two main components: the first vent window frame assembly and the second vent window frame assembly, which are fastened to each other, e. g. clipped into each other via a clip connection, or clamped at each other via a clamp connection, and so on. Either the first vent window frame assembly or the second vent window frame assembly may form guide rails in which the movable vent window pane may glide. Alternatively, the movable vent window pane may be hinged to one of the first vent window frame assembly or the second vent window frame assembly.

Advantageously, the inventive vent window assembly may be fully transparent, or at least translucent. Furthermore, by rigidly attaching the first vent window frame only to the second vent window frame at the vent window opening, both are maintained at the vent window opening without a need for mechanically-loaded drill holes in the main window pane, as conventionally required when using fasteners such as screws or bolts. Thus, stress-concentration-induced cracks around drill holes, as may be observed on fastened vent window assemblies, may be avoided. Likewise, due to an absence of structurally-bonded connections between the vent window assembly and the main window pane adhesive failures may be avoided.

To further increase safety and reliability of the vent window assembly that is mounted to the main window pane, an overall stiffness of the assembly can be tuned by a suitable design of respectively used fastening means, such as clips or clamps, in particular to control vibrations. In particular, the main window pane may even be a double curvature-shaped main window.

Preferably, any clips or clamps used to fasten the vent window assembly at the main window pane, i. e. to attach the first vent window frame assembly to the second vent window frame assembly, may be permanently lockable or, e. g., bendable to enable disassembling at a later point in time. The clips or clamps may be provided at specific locations only, i. e. in a punctiform manner, or they may be provided as continuous or surrounding elements all along the first vent window frame assembly and the second vent window frame assembly.

Advantageously, an underlying weight of the vent window assembly can be reduced by design optimization in order to be competitive with other assemblies. Another advantage is that the vent window assembly is compatible with existing drainage systems, as well as with spoiler designs, in particular to achieve lower noise/vibration levels and an increase of water tightness.

More specifically, in order to improve water tightness, suitable rubber or foam layers may be provided on associated contact surfaces formed between the main window pane and the first vent window frame assembly, as well as between the main window pane and the second vent window frame assembly. Advantageously, such rubber or form layers also prevent hard contact surfaces and reduce vibrations between the main window pane and the first vent window frame assembly, as well as between the main window pane and the second vent window frame assembly.

According to some aspects, the first vent window frame assembly is rigidly attached to the second vent window frame assembly through one of a press fit connection, a snap-lock connection, or a clip connection.

According to some aspects, the first vent window frame assembly comprises at least one fastener, and the second vent window frame assembly comprises at least one retaining element adapted for retaining the at least one fastener.

For instance, the at least one fastener may comprise a locking pin, and the at least one retaining element may comprise a locking pin snap-in counterpart.

Preferably, the vent window assembly comprises a guide rail assembly that accommodates the movable vent window pane glidingly.

The guide rail assembly may be integrated into one of the first or second vent window frame assemblies.

Alternatively, the movable vent window pane may be mounted pivotally to one of the first or second vent window frame assemblies.

According to some aspects, the vent window assembly comprises at least one sealing element arranged between the first support frame of the first vent window frame assembly and the first surface of the main window pane.

The at least one sealing element may comprise a rubber layer and/or a foam layer.

According to some aspects, the vent window assembly comprises at least one other sealing element arranged between the second support frame of the second vent window frame assembly and the second surface of the main window pane.

The at least one other sealing element may comprise a rubber layer and/or a foam layer.

According to some aspects, the second vent window frame assembly is detachably mounted to the first vent window frame assembly at the vent window opening.

Alternatively, the second vent window frame assembly may be permanently locked to the first vent window frame assembly at the vent window opening.

The present invention relates further to a vehicle comprising a window with a vent window assembly as described above.

The vehicle may be embodied as an aircraft, in particular a rotorcraft, wherein the window is one of a cockpit window or a cabin side window.

Preferred embodiments of the invention are outlined by way of example in the following description with reference to the attached drawings. In these attached drawings, identical or identically functioning components and elements are labeled with identical reference numbers and characters and are, consequently, only described once in the following description.
- Figure 1 shows a lateral view of an illustrative rotorcraft with a cockpit window that comprises a vent window assembly according to the present invention,
- Figure 2 shows a cut view at a first position of the cockpit window with the vent window assembly of Figure 1 in disassembled and assembled state, seen along a cut line II-II in Figure 3,
- Figure 3 shows a cut view and a lateral view of the cockpit window with the vent window assembly of Figure 2 in assembled state,
- Figure 4 shows a cut view at a second position of the cockpit window with the vent window assembly of Figure 2 and Figure 3 in disassembled and assembled state, seen along a cut line IV-IV in Figure 5, and
- Figure 5 shows a cut view and a lateral view of the cockpit window with the vent window assembly of Figure 4 in assembled state.

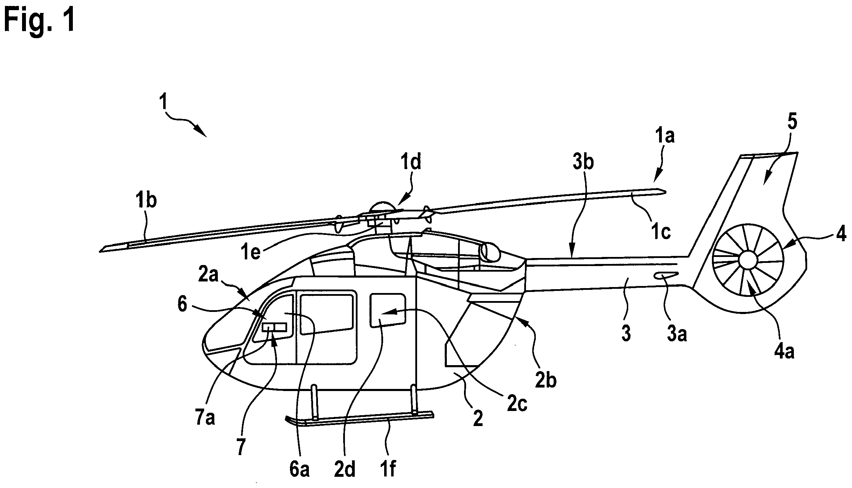

Figure 1 shows an aircraft 1 that is illustratively embodied as a rotorcraft and, more particularly, as a helicopter. Thus, for purposes of simplicity and clarity, the aircraft 1 is hereinafter referred to as the "helicopter 1". The present invention is, however, not limited to helicopters and may likewise be applied to any other aircraft and, more generally, to any other vehicle, such as a car, a truck, a train, a ship, and so on.

Illustratively, the helicopter 1 comprises at least one main rotor 1a, preferably a multi-blade main rotor, for providing lift and forward or backward thrust during operation. By way of example, the at least one main rotor 1a comprises a plurality of rotor blades which are connected at an associated rotor head 1d to a rotor shaft 1e, which rotates in operation of the helicopter 1 about an associated rotor axis. Two rotor blades of the plurality of rotor blades are illustratively separately labelled with the reference signs 1b, 1c.

Furthermore, the helicopter 1 comprises a fuselage 2. By way of example, a left-hand side of the fuselage 2 is shown and, thus, a portside wall of the fuselage 2 of the helicopter 1, to which a landing gear 1f of the skid-type is attached.

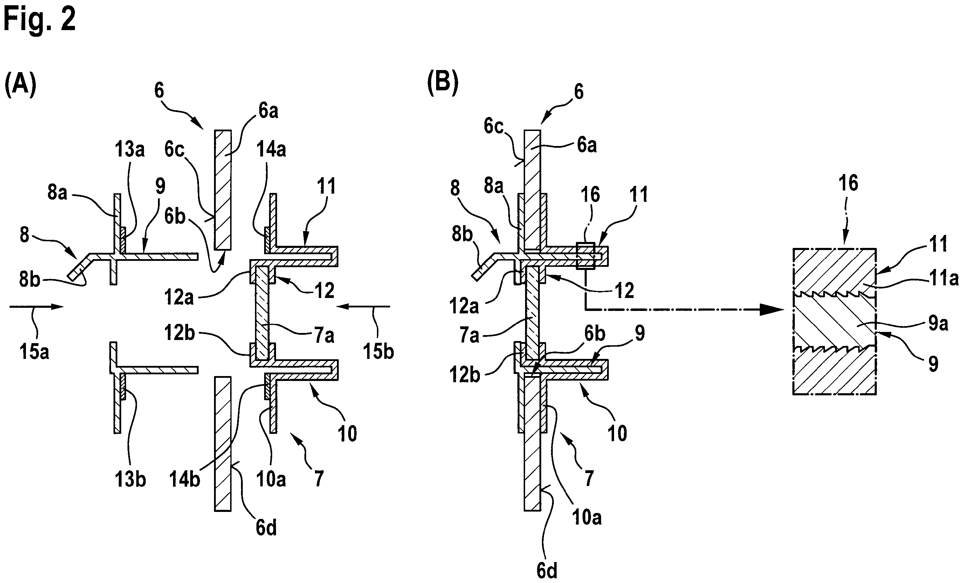

Illustratively, the fuselage 2 forms an aircraft interior region that accommodates a cockpit 2a and that may further accommodate a cabin 2c for passengers and/or cargo. Preferably, the cockpit 2a is provided with at least one window 6 that comprises a main window pane 6a to which a vent window assembly 7 with a movable vent window pane 7a is mounted, as described below at Figure 2 to Figure 5. By way of example, the at least one window 6 is a cockpit door main window. Illustratively, the cabin 2c is also provided with at least one window 2d that forms a cabin side window and that may also be provided with the vent window assembly 7.

Moreover, the fuselage 2 of the helicopter 1 is connected at a rear fuselage 2b to a tail boom 3 with a horizontal stabilizer 3a. The tail boom 3 may be implemented as a slim beam element that comprises at least a tubular tail boom cone 3b.

The helicopter 1 illustratively further comprises at least one preferentially shrouded counter-torque device 4 configured to provide counter-torque during operation, i. e. to counter the torque created by rotation of the at least one main rotor 1a for purposes of balancing the helicopter 1 in terms of yaw. The at least one counter-torque device 4 is illustratively provided at an aft section of the tail boom 3 and preferably comprises a tail rotor 4a. The aft section of the tail boom 3 preferably further comprises a fin 5.

Figure 2 shows in part (A) and part (B) the window 6 comprising the main window pane 6a according to Figure 1 with the vent window assembly 7 comprising the movable vent window pane 7a according to Figure 1. Illustratively, the main window pane 6a comprises a vent window opening 6b that is equipped with the vent window assembly 7. The movable vent window pane 7a is adapted for closing the vent window opening 6b in a closed state of the vent window assembly 7.

More specifically, the vent window assembly 7 comprises at least a first vent window frame assembly 8 and a second vent window frame assembly 10. The first vent window frame assembly 8 comprises a first support frame 8a that is arranged on a first surface 6c of the main window pane 6a. By way of example, the first surface 6c forms an outer surface of the main window pane 6a and, likewise, the first vent window frame assembly 8 forms an outer vent window frame assembly and the first support frame 8a forms an outer support frame.

Similarly, the second vent window frame assembly 10 comprises a second support frame 10a that is arranged on a second surface 6d of the main window pane 6a. By way of example, the second surface 6d forms an inner surface of the main window pane 6a and, likewise, the second vent window frame assembly 10 forms an inner vent window frame assembly and the second support frame 10a forms an inner support frame. The inner vent window frame assembly 10 is rigidly attached to the outer vent window frame assembly 8 at the vent window opening 6b such that the outer and inner vent window frame assemblies 8, 10 fasten each other at the main window pane 6a.

Preferably, the outer vent window frame assembly 8 comprises at least one fastener 9 and the inner vent window frame assembly 10 may comprise at least one retaining element 11 adapted for retaining the at least one fastener 9. For instance, the at least one fastener 9 may comprise one or more locking pins and the at least one retaining element 11 may comprise one or more locking pin snap-in counterparts. As illustrated in an enlarged detail 16, the one or more locking pins 9 may be toothed rods 9a and the one or more locking pin snap-in counterparts 11 may be toothed sleeves 11a. The locking pins 9 and the locking pin snap-in counterparts 11 may be provided only at specific locations of the vent window assembly 7, i. e. in a punctiform manner, or they may be provided as continuous or surrounding elements all along the outer vent window frame assembly 8 and the inner vent window frame assembly 10.

Preferably, the vent window assembly 7 comprises a guide rail assembly 12 that accommodates the movable vent window pane 7a glidingly. The guide rail assembly 12 may comprise an upper guide rail 12a and a lower guide rail 12b for accommodating the movable vent window pane 7a glidingly. By way of example, the inner vent window frame assembly 10 embodies the guide rail assembly 12.

In order to improve respective noise/vibration performances of the vent window assembly 7, the outer vent window frame assembly 8 may be equipped with a spoiler 8b. Furthermore, in order to provide for a desired water tightness and to further reduce vibrations, the vent window assembly 7 may be equipped with at least one sealing element 13a, 13b arranged between the outer support frame 8a of the outer vent window frame assembly 8 and the outer surface 6c of the main window pane 6a. Likewise, the vent window assembly 7 may be equipped with at least one other sealing element 14a, 14b arranged between the inner support frame 10a of the inner vent window frame assembly 10 and the inner surface 6d of the main window pane 6a. Each one of the sealing elements 13a, 13b, 14a, 14b may comprise a rubber layer and/or a foam layer.

More specifically, part (A) and part (B) of Figure 2 show an illustrative mounting process of the vent window assembly 7 to the main window pane 6a of the window 6, wherein the movable vent window pane 7a is mounted to its closed position in the closed state of the vent window assembly 7. In part (A), the vent window assembly 7 is shown at the main window pane 6a of the window 6 in disassembled state and in part (B) in assembled state.

According to part (A), the outer vent window frame assembly 8 with the outer support frame 8a is initially arranged at the vent window opening 6b close to the outer surface 6c of the main window pane 6a and the inner vent window frame assembly 10 is initially arranged at the vent window opening 6b close to the inner surface 6d of the main window pane 6a. Illustratively, the outer support frame 8a is arranged at the vent window opening 6b such that the one or more locking pins 9 point toward the vent window opening 6b. Furthermore, the movable vent window pane 7a is illustratively accommodated in the guide rail assembly 12 and the inner support frame 10a is arranged at the vent window opening 6b such that the movable vent window pane 7a points toward the vent window opening 6b. Then, the outer vent window frame assembly 8 is pushed toward the vent window opening 6b, as illustrated with an arrow 15a, and the inner vent window frame assembly 10 is pushed toward the vent window opening 6b, as illustrated with an arrow 15b.

According to part (B), the outer vent window frame assembly 8 was pushed toward the vent window opening 6b, as illustrated with the arrow 15a, and the inner vent window frame assembly 10 was pushed toward the vent window opening 6b, as illustrated with the arrow 15b, such that the one or more locking pins 9 traversed the vent window opening 6b and engaged with the one or more locking pin snap-in counterparts 11. Thus, the inner vent window frame assembly 10 is rigidly attached to the outer vent window frame assembly 8 at the vent window opening 6b by the engagement of the one or more locking pins 9 with the one or more locking pin snap-in counterparts 11. Preferably, the inner vent window frame assembly 10 is thereby permanently locked to the outer vent window frame assembly 8 at the vent window opening 6b.

At this point, it should be noted that the sealing elements 13a, 13b, 14a, 14b are omitted in part (B). However, this is only for simplicity and clarity and not for limiting the invention accordingly.

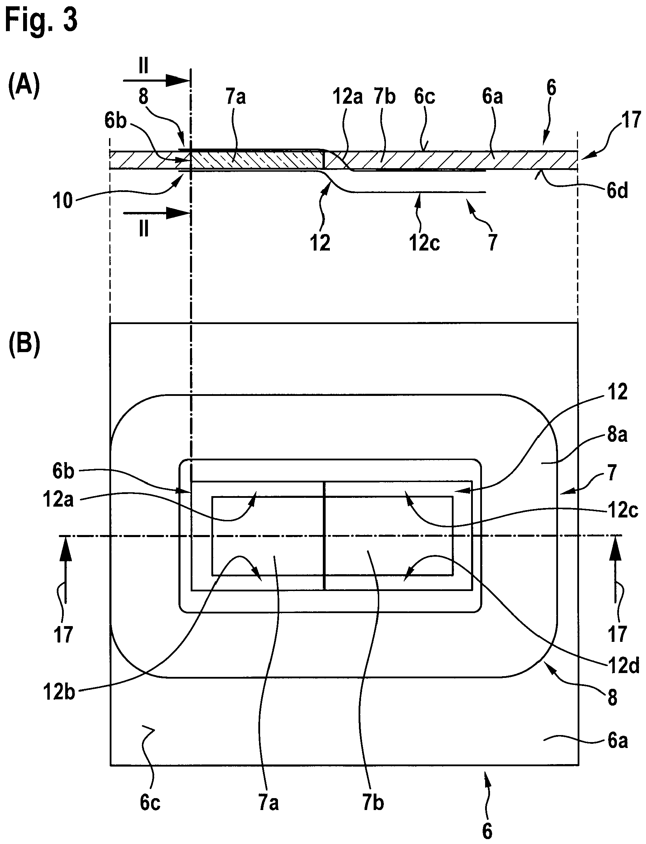

Figure 3 shows in part (A) and part (B) the window 6 comprising the main window pane 6a according to Figure 2 with the vent window assembly 7 comprising the movable vent window pane 7a of Figure 2. The vent window assembly 7 comprises the outer vent window frame assembly 8 and the inner vent window frame assembly 10.

More specifically, part (A) is a cut view seen along a cut line 17 in part (B), which is a lateral view of the window 6 with the vent window assembly 7. However, for simplicity and clarity part (A) only illustrates the guide rail assembly 12 with the movable vent window pane 7a, as well as a permanently closing vent window pane 7b of the vent window assembly 7.

As described at Figure 2, the main window pane 6a comprises the vent window opening 6b that is equipped with the vent window assembly 7. Illustratively, the vent window assembly 7 is shown in the closed state and a cut line II-II is drawn along which the cut view of Figure 2 as described above is shown. In other words, the movable vent window pane 7a closes the vent window opening 6b.

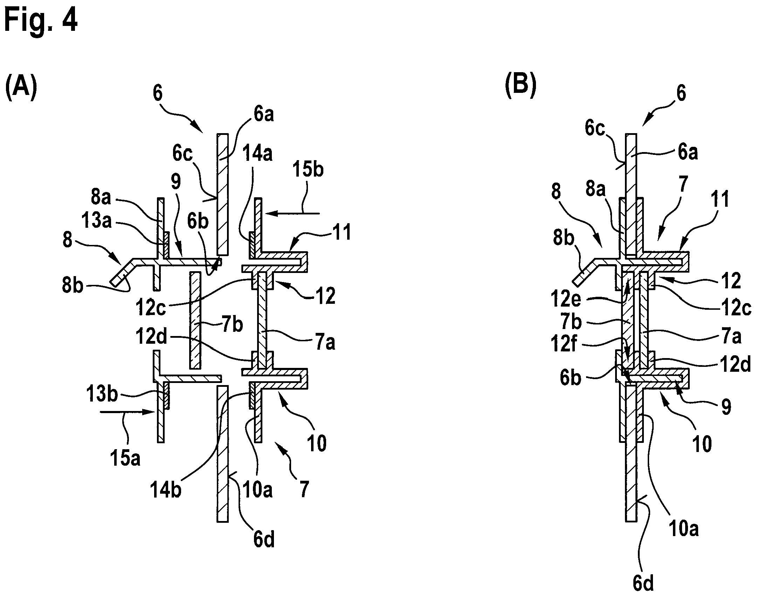

At this point, it should be noted that in the illustrated realization the movable vent window pane 7a actually only closes a part of the vent window opening 6b in the closed state, whereas the remaining part is permanently closed by means of the permanently closing vent window pane 7b. The latter is preferably rigidly mounted to the main window pane 6a using the outer vent window frame assembly 8 and the inner vent window frame assembly 10, as described below at Figure 4.

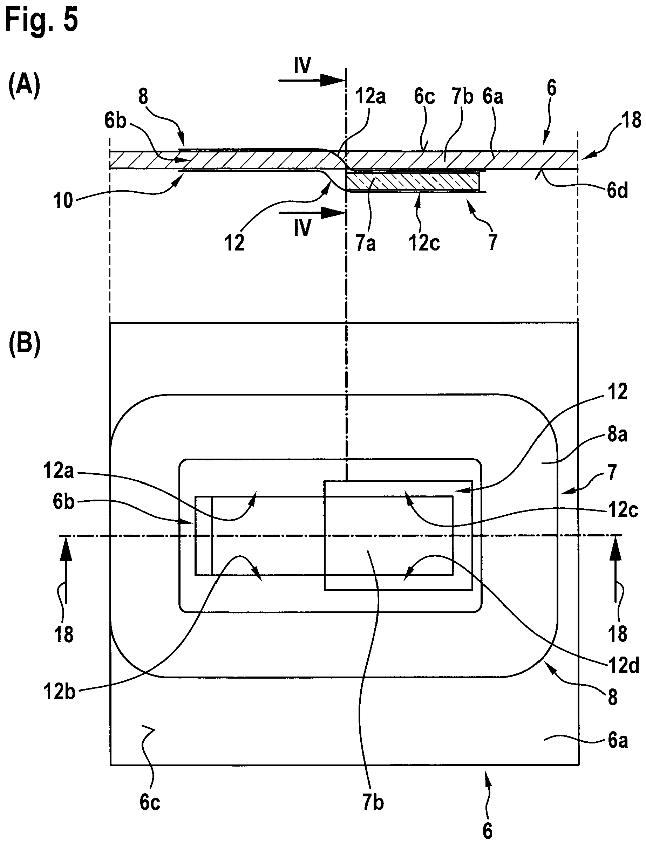

Besides that, Figure 3 illustrates further to Figure 2 upper and lower guide rail extensions 12c, 12d of the guide rail assembly 12 of Figure 2. These guide rail extensions 12c, 12d illustratively extend on, i. e. along the inner surface 6d of the main window pane 6a. They are required to enable gliding movement of the movable vent window pane 7a from an illustrated closed position to an opened position illustrated in Figure 4 and Figure 5.

Figure 4 shows in part (A) and part (B) the window 6 comprising the main window pane 6a according to Figure 2 and Figure 3 with the vent window assembly 7 comprising the movable vent window pane 7a of Figure 2 and Figure 3, as well as the permanently closing vent window pane 7b of Figure 3. The main window pane 6a comprises the vent window opening 6b that is equipped with the vent window assembly 7. However, in contrast to Figure 2 and Figure 3 the vent window assembly 7 is now shown in opened state. Accordingly, the part of the vent window opening 6b that is closed by the movable vent window pane 7a in closed state of the vent window assembly 7 is now open.

As described above at Figure 2 and Figure 3, the vent window assembly 7 comprises the outer vent window frame assembly 8 with the outer support frame 8a and the inner vent window frame assembly 10 with the inner support frame 10a. The inner vent window frame assembly 10 comprises the upper and lower guide rail extensions 12c, 12d of the guide rail assembly 12 of Figure 2 and Figure 3, which extend on and along the inner surface 6d of the main window pane 6a.

However, further to Figure 2 and Figure 3, Figure 4 also shows additional upper and lower accommodations 12e, 12f for accommodating the permanently closing vent window pane 7b. The upper and lower accommodations 12e, 12f are illustratively formed by the outer support frame 8a and the inner support frame 10a. In order to provide for a desired water tightness and to reduce vibrations, the upper and lower accommodations 12e, 12f may be equipped with suitable sealing elements. The sealing elements may be arranged between the permanently closing vent window pane 7b and the outer and inner support frames 8a, 10a. They may comprise rubber layers and/or foam layers.

Similar to Figure 2, part (A) and part (B) of Figure 4 show an illustrative mounting process of the vent window assembly 7 to the main window pane 6a of the window 6. In part (A), the vent window assembly 7 is shown at the main window pane 6a of the window 6 in disassembled state and in part (B) in assembled state. However, in contrast to Figure 2 the movable vent window pane 7a is mounted to its opened position in the opened state of the vent window assembly 7.

More specifically, according to part (A) the outer vent window frame assembly 8 with the outer support frame 8a is initially arranged at the vent window opening 6b close to the outer surface 6c of the main window pane 6a and the inner vent window frame assembly 10 is initially arranged at the vent window opening 6b close to the inner surface 6d of the main window pane 6a. Furthermore, the movable vent window pane 7a is accommodated in the upper and lower guide rail extensions 12c, 12d of the guide rail assembly 12 and the inner support frame 10a is arranged at the vent window opening 6b such that the movable vent window pane 7a points toward the vent window opening 6b. Moreover, the permanently closing vent window pane 7b is arranged between the outer support frame 8a and the inner support frame 10a. Then, the outer vent window frame assembly 8 is pushed toward the vent window opening 6b, as illustrated with the arrow 15a of Figure 2, and the inner vent window frame assembly 10 is pushed toward the vent window opening 6b, as illustrated with the arrow 15b of Figure 2.

According to part (B), the outer vent window frame assembly 8 was pushed toward the vent window opening 6b, as illustrated with the arrow 15a, and the inner vent window frame assembly 10 was pushed toward the vent window opening 6b, as illustrated with the arrow 15b, such that the inner vent window frame assembly 10 is rigidly attached to the outer vent window frame assembly 8 at the vent window opening 6b, as described above at Figure 2. Thereby, the upper and lower accommodations 12e, 12f are formed and the permanently closing vent window pane 7b is rigidly mounted therein.

Figure 5 shows in part (A) and part (B) the window 6 comprising the main window pane 6a according to Figure 4 with the vent window assembly 7 comprising the movable vent window pane 7a and the permanently closing vent window pane 7b of Figure 4. The vent window assembly 7 comprises the outer vent window frame assembly 8 and the inner vent window frame assembly 10.

More specifically, part (A) is a cut view seen along a cut line 18 in part (B), which is a lateral view of the window 6 with the vent window assembly 7. However, for simplicity and clarity part (A) only illustrates the guide rail assembly 12 with the movable vent window pane 7a, as well as the permanently closing vent window pane 7b of the vent window assembly 7.

As described at Figure 4, the main window pane 6a comprises the vent window opening 6b that is equipped with the vent window assembly 7. Illustratively, the vent window assembly 7 is shown in the opened state and a cut line IV-IV is drawn along which the cut view of Figure 4 as described above is shown.

Finally, it should be noted that modifications to the above-described embodiments are within the common knowledge of the person skilled in the art and, thus, also considered as being part of the present invention.

For instance, according to Figure 2 to Figure 5 the movable vent window pane 7a is preferably glidingly accommodated in the guide rail assembly 12. However, the movable vent window pane 7a may alternatively be mounted pivotally to one of the outer or inner vent window frame assemblies 8, 10.

Furthermore, according to Figure 2 to Figure 5 the inner vent window frame assembly 10 is preferably permanently locked to the outer vent window frame assembly 8 at the vent window opening 6b. Nevertheless, the inner vent window frame assembly 10 may alternatively be mounted detachably to the outer vent window frame assembly 8 at the vent window opening 6b.

Moreover, according to Figure 2 to Figure 5 the guide rail assembly 12 is preferably integrated into the inner vent window frame assembly 10. However, the guide rail assembly 12 may alternatively be integrated into the outer vent window frame assembly 8.

Finally, according to Figure 2 to Figure 5, the outer vent window frame assembly 8 is rigidly attached to the inner vent window frame assembly 10 through a snap-lock connection. However, any other suitable type of connection, such as a cramp connection, a press fit connection, a clip connection or others is likewise contemplated.

### Reference List

- 1: rotorcraft
- 1a: multi-blade main rotor
- 1b, 1c: rotor blades
- 1d: rotor head
- 1e: rotor shaft
- 1f: landing gear
- 2: fuselage
- 2a: cockpit
- 2b: rear fuselage
- 2c: cabin
- 2d: cabin side window
- 3: tail boom
- 3a: horizontal stabilizer
- 3b: tail boom cone
- 4: counter-torque device
- 4a: tail rotor
- 5: fin
- 6: door main window
- 6a: main window pane
- 6b: vent window opening
- 6c: outer main window pane surface
- 6d: inner main window pane surface
- 7: vent window assembly
- 7a: movable vent window pane
- 7b: permanently closing vent window pane
- 8: outer vent window frame assembly
- 8a: outer support frame
- 8b: spoiler
- 9: locking pins
- 9a: toothed rod
- 10: inner vent window frame assembly
- 10a: inner support frame
- 11: locking pin snap-in counterparts
- 11a: toothed sleeve
- 12: vent window pane guide rail assembly
- 12a: upper guide rail
- 12b: lower guide rail
- 12c: upper inner guide rail extension
- 12d: lower inner guide rail extension
- 12e: upper accommodation
- 12f: lower accommodation
- 13a, 13b: outer seals
- 14a, 14b: inner seals
- 15a, 15b: mounting directions
- 16: enlarged detail
- 17, 18: cut view directions

## Claims

1. A window (6) for a vehicle (1) comprising:
a main window pane (6a) with a vent window opening (6b); and
a vent window assembly (7) that is mounted to the main window pane (6a) and comprises:
a movable vent window pane (7a) that is adapted for closing the vent window opening (6b) in a closed state of the vent window assembly (7);
a first vent window frame assembly (8) comprising a first support frame (8a) that is arranged on a first surface (6c) of the main window pane (6a); and
a second vent window frame assembly (10) comprising a second support frame (10a) that is arranged on a second surface (6d) of the main window pane (6a), wherein the second vent window frame assembly (10) is rigidly attached to the first vent window frame assembly (8) at the vent window opening (6b) such that the first and second vent window frame assemblies (8, 10) fasten each other at the main window pane (6a).

2. The window (6) of claim 1,
wherein the first vent window frame assembly (8) is rigidly attached to the second vent window frame assembly (10) through one of a press fit connection, a snap-lock connection, or a clip connection.

3. The window (6) of claim 1 or 2,
wherein the first vent window frame assembly (8) comprises at least one fastener (9), and wherein the second vent window frame assembly (10) comprises at least one retaining element (11) adapted for retaining the at least one fastener (9).

4. The window (6) of claim 3,
wherein the at least one fastener (9) comprises a locking pin, and wherein the at least one retaining element (11) comprises a locking pin snap-in counterpart.

5. The window (6) of any one of the preceding claims,
wherein the vent window assembly (7) comprises a guide rail assembly (12) that accommodates the movable vent window pane (7a) glidingly.

6. The window (6) of claim 5,
wherein the guide rail assembly (12) is integrated into one of the first or second vent window frame assemblies (8, 10).

7. The window (6) of any one of claims 1 to 4,
wherein the movable vent window pane (7a) is pivotally mounted to one of the first or second vent window frame assemblies (8, 10).

8. The window (6) of any one of the preceding claims,
wherein the vent window assembly (7) comprises at least one sealing element (13a, 13b) arranged between the first support frame (8a) of the first vent window frame assembly (8) and the first surface (6c) of the main window pane (6a).

9. The window (6) of claim 8,
wherein the at least one sealing element (13a, 13b) comprises a rubber layer and/or a foam layer.

10. The window (6) of claim 8 or 9,
wherein the vent window assembly (7) comprises at least one other sealing element (14a, 14b) arranged between the second support frame (10a) of the second vent window frame assembly (10) and the second surface (6d) of the main window pane (6a).

11. The window (6) of claim 10,
wherein the at least one other sealing element (14a, 14b) comprises a rubber layer and/or a foam layer.

12. The window (6) of any one of the preceding claims,
wherein the second vent window frame assembly (10) is detachably mounted to the first vent window frame assembly (8) at the vent window opening (6b).

13. The window (6) of any one of claims 1 to 11,
wherein the second vent window frame assembly (10) is permanently locked to the first vent window frame assembly (8) at the vent window opening (6b).

14. A vehicle (1) comprising at least one window (6) according to any one of the preceding claims.

15. The vehicle (1) of claim 14, which is embodied as an aircraft, in particular a rotorcraft, wherein the window (6) is one of a cockpit window or a cabin side window.
